# EUROPEAN PATENT APPLICATION

(11) **EP 1 548 593 A2**
(43) Date of publication of application: **29.06.2005**
(21) Application number: 04077879.7
(22) Date of filing: 20.10.2004
(51) Int. Cl.: G06F 9/50, G06F 11/20

(54) **Network system and method of sharing memory of electronic appliance using the same**

(30) Priority: 20.10.2003 KR 2003072901
(71) Applicant: LG Electronics Inc., Seoul 150-875 (KR)
(72) Inventor: Hyo, Cheun Jeong, Daegu-si Gyeongsangbuk-do (KR)
(74) Representative: Ekström, Nils

(57) **Abstract**

A network system and method of sharing a memory of an electronic appliance using a network system is provided. The method includes the steps of: if a memory of a first electronic appliance receives data access information, storing data in the memory of the first electronic appliance; and if the first electronic appliance has a deficient memory capacity, accessing to a memory of the other electronic appliance connected through a network to store data in the memory of the other electronic appliance.

## Description

### BACKGROUND OF THE INVENTION

### Field of the Invention

The present invention relates to a network system and method of sharing a memory of an electronic appliance using the same in which a plurality of electronic appliances are connected using the network, and memories of the plurality of electronic appliances are shared through a mutual communication.

### Description of the Related Art

In a related-art method, data is mutually transmitted and received using an RS232C standard of a PLC modem or a wire or wireless solution such as IEEE1394/802.11 by networking a digital TV and a communicating appliance. The related-art method is being vigorously studied in a domestic or foreign country.

In a network system, a plurality of peripheral appliances such as a variety of electronic appliances, that is, a personal computer, a portable phone, a refrigerator, a washing machine and the like are mutually connected using one network.

That is, in the network system, the peripheral appliances are connected and controlled to one main electronic appliance through a network.

As such, the network system is being developed on the basis of an IEEE1394 standard and an IEC61883 standard to control all of the peripheral home appliances using one main electronic appliance.

At this time, in order to control the home appliances using one main electronic appliance, a protocol should be provided to integrate and control a variety of signals on the basis of the IEEE1394 standard.

Further, a system should be provided to allow a user to recognize and control an operation state of each of the home appliances.

Hereinafter, a related-art network system is described with reference to the attached drawings.

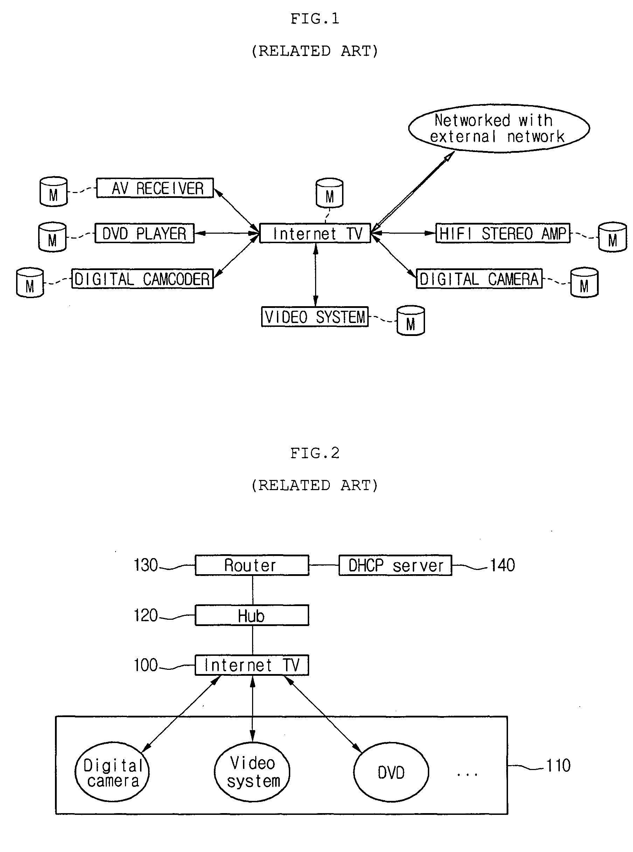

Figs. 1 and 2 are schematic block diagrams illustrating a related-art network system.

Referring to Figs. 1 and 2, the network system includes an Audiovisual (AV) receiver, a Digital Video Disc (DVD) player, a digital camcorder, a video system, a digital camera, a High-Fidelity (HiFi) stereo amplifier and the like, which are operated as a client device 110 on the basis of an internet TV 100 networked with an external network.

Additionally, a router 130 is connected with a Dynamic Host Configuration Protocol (DHCP) server 140 by using a communication network such as an Asynchronous Digital Subscriber Line (ADSL), a cable modem, or the like. A hub 120 collects line cables of the client device 110 in a star topology network.

Further, the internet TV 100 having a web browser therein is connected between the hub 120 and the client device 110, and is used as the server of the client device 110.

Hereinafter, an operation of the above-constructed network system is described.

First, power is applied to the internet TV 100, and the router 130 is connected to the DHCP server 140 to use an internet service.

Additionally, the internet TV 100 is allotted an Internet Protocol (IP) address and information on a network environment (a subnet mask, a gateway, a DNS server address and the like) from the DHCP server 140 to be operated as a master.

And thus, the client device 110 communicates with the internet TV 100. Herein, the electronic appliances, such as the client device 110 and the internet TV 100, respectively have memories (M), and use only their own allocated memories (M) to store data.

However, the related-art network system has a drawback in that an internal communication should be performed with other appliances necessarily via the server, and even an external communication should be performed via the server.

Further, the related-art network system has a drawback in that since each of the electronic appliances independently uses the memory, the memory is limited in use.

### SUMMARY OF THE INVENTION

Accordingly, the present invention is directed to a network system and method of sharing a memory of an electronic appliance using the same that substantially obviates one or more problems due to limitations and disadvantages of the related art.

An object of the present invention is to provide a method of sharing a memory of an electronic appliance using a network in which home electronic appliances share the memory by using a communication between clients.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided a method of sharing a memory of an electronic appliance using a network system, the method including the steps of: if a memory of a first electronic appliance receives data access information, storing data in the memory of the first electronic appliance; and if the first electronic appliance has a deficient memory capacity, accessing to a memory of the other electronic appliance connected through a network to store data in the memory of the other electronic appliance.

In another aspect of the present invention, there is provided a method of sharing a memory of an electronic appliance using a network system, the method including the steps of: if a memory of a first electronic appliance receives data access information, storing data in the memory of the first electronic appliance; if the first electronic appliance has a deficient memory capacity, searching and selecting a memory of the other electronic appliance connected through a network; storing data in the selected memory of the other electronic appliance; and storing information on the other electronic appliance having the data stored.

In a further another aspect of the present invention, there is provided a method of sharing a memory of an electronic appliance using a network system, the method including the steps of: receiving a memory access signal for data storage in any one of electronic appliances connected to the network system; searching memories of the electronic appliances connected to the network system; and storing data in at least one of the memories of the electronic appliances connected to the network system.
In a still further another aspect of the present invention, there is provided a network system including at least two electronic appliances each having a memory, the electronic appliances being connected each other for a data communication, wherein each of the electronic appliances stores data in its own memory or the other appliance's memory after a data access.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Figs. 1 and 2 are views illustrating related-art network systems;

Fig. 3 is a view illustrating a concept of sharing a memory of each of electronic appliances in a network system according to the present invention; and

Figs. 4 to 6 are flowcharts illustrating methods of sharing a memory of an electronic appliance using a network system according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

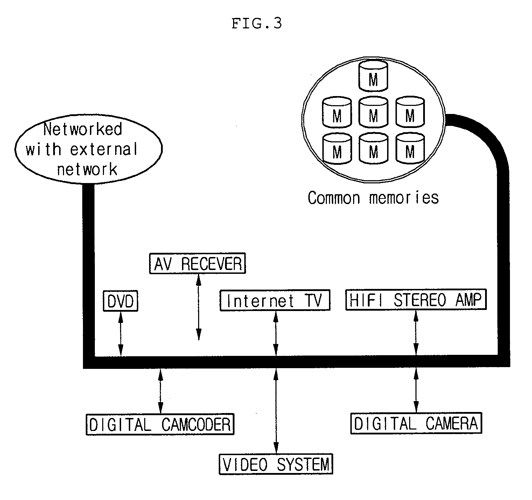

Fig. 3 is a view illustrating a concept of sharing a memory of each of electronic appliances in a network system according to the present invention.

Referring to Fig. 3, each of the electronic appliances physically has a memory, and is connected to a network to access a memory of the other electronic appliance through a communication using a Peer-to-Peer (P2P) way.

In other words, a related-art network system uses a main electronic appliance (for example, television) as a server to perform a mutual communication between peripheral electronic appliances, but the present invention can allow each of the electronic appliances to directly perform a data communication in the P2P way without the server.

Since the electronic appliances connected using the P2P way can access to each of the memories of the electronic appliances, the memories of the electronic appliances can be regarded as common memories of the electronic appliances connected to the network system.

The present invention discloses a method in which each of the electronic appliances can share the memory even without the server.

Further, a specific electronic appliance can be used as the server in the network system. Even in this case, the memory sharing method according to the present invention can be employed.

In case where a first electronic appliance has a deficient memory capacity, data can be stored in a memory of a second electronic appliance through the network. According to need, data can be divided and stored in the memories of a variety of electronic appliances.

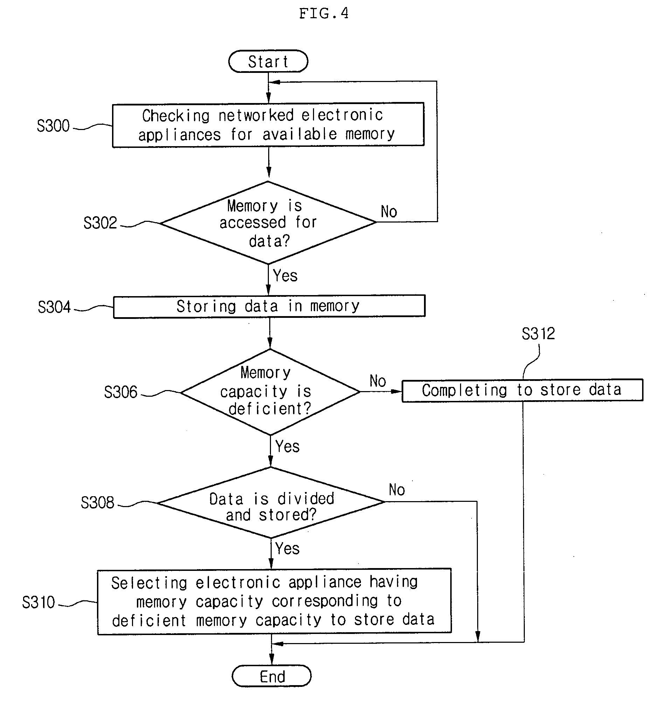

A method of dividing and storing data in the memory of the electronic appliance is described with reference to Figs. 4 to 6.

Fig. 4 is a flowchart illustrating a method of sharing the memory of the electronic appliance connected to the network system according to an embodiment of the present invention.

Hereinafter, a case where a memory of an internet TV is accessed is described.

Referring to Fig. 4, the internet TV checks the electronic appliances networked to the network for an available memory (S300). At this time, the internet TV and the networked electronic appliances share the memories with one another.

After the S300, the internet TV determines whether or not its own memory is accessed for data (S302).

If it is determined that the memory is accessed for data as a result of the S302, the internet TV stores data in its own memory (S304).

In the S304, the internet TV determines whether or not its own memory has a deficient capacity (S306).

If it is determined that the memory has the deficient capacity as a result of the S306, the internet TV determines whether or not to divide and store data in the memory of the other electronic appliance (S308).

If it is intended to divide and store data in the memory of the other electronic appliances as a result of the S308, the internet TV selects an electronic appliance having a memory capacity corresponding to the deficient memory capacity to store data in the memory of the selected electronic appliance (S310).

If data is completely stored as a result of the S310, the internet TV stores a kind of the electronic appliance having the data stored, and information on an Internet Protocol (IP) number and the like, together. After that, the internet TV uses information on the electronic appliance having the data stored, to access to data.

If the memory capacity is not deficient as a result of the S308, the internet TV completes to store data in its own memory (S312) .

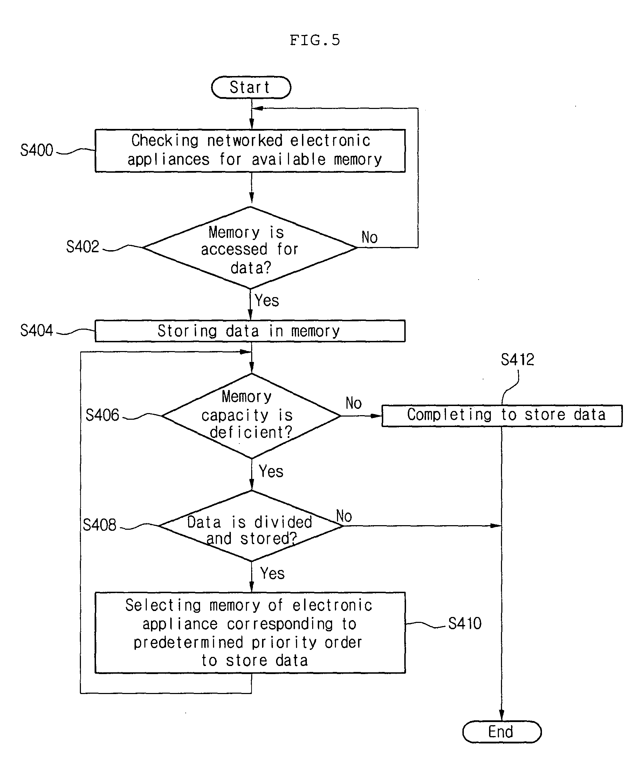

Fig. 5 is a flowchart illustrating a method of sharing a memory of an electronic appliance using a network system according to another embodiment of the present invention.

Referring to Fig. 5, an internet TV checks for electronic appliances networked for an available memory to store information on the available memory (S400). At this time, the internet TV and the electronic appliances networked to one another share the memories with one another.

Information on the available memory includes a name, an IP number, a memory capacity, a priority order and the like of a corresponding electronic appliance. The priority order can be determined depending on the memory capacity, or can be determined by an order selected by a user.

After the S400, the internet TV determines that its own memory is accessed for data (S402).

If it is determined that the memory is accessed for data as a result of the S402, the internet TV stores data in its own memory (S404).

In the S404, the internet TV determines whether or not its own memory has a deficient capacity (S406).

If it is determined that the memory has the deficient capacity as a result of the S406, the internet TV determines whether or not to divide and store data in the memory of the other electronic appliance (S408).

If it is intended to divide and store data in the memory of the other electronic appliance as a result of the S408, the internet TV selects a memory of an electronic appliance corresponding to a predetermined priority order, to store data in the selected memory (S410).

If data is completely stored as a result of the S410, the internet TV stores a kind of the electronic appliance having the data stored, and information on an Internet Protocol (IP) number and the like, together. After that, the internet TV uses information on the electronic appliance having the data stored, to access to data.

If the memory capacity is not deficient as a result of the S408, the internet TV completes to store data in its own memory (S412).

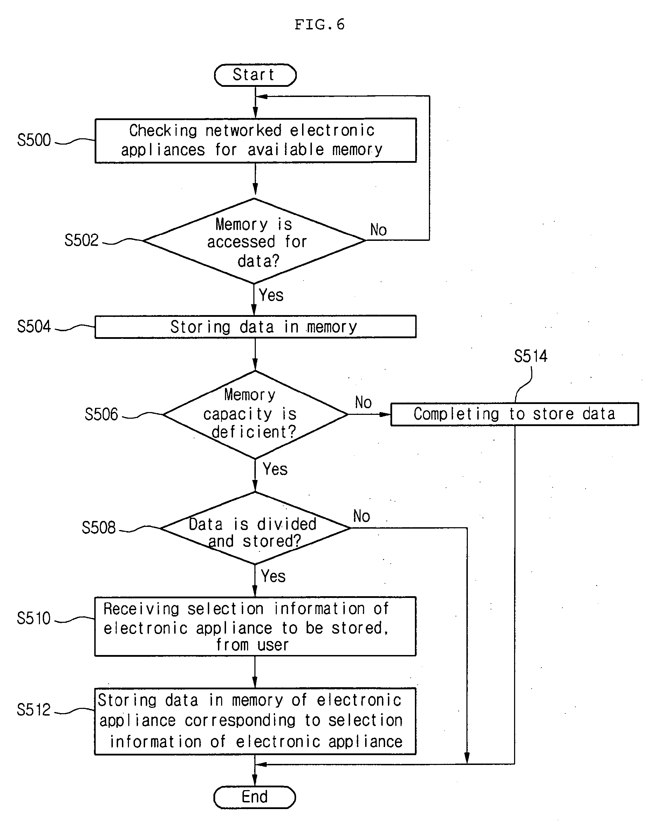

Fig. 6 is a flowchart illustrating a method of sharing a memory of an electronic appliance using a network system according to a further another embodiment of the present invention.

Referring to Fig. 6, the internet TV checks the electronic appliances networked to the network for an available memory (S500). At this time, the internet TV and the networked electronic appliances share the memories with one another.

After the S500, the internet TV determines whether or not its own memory is accessed for data (S502).

If it is determined that the memory is accessed for data as a result of the S502, the internet TV stores data in its own memory (S504).

In the S504, the internet TV determines whether or not its own memory has a deficient capacity (S506).

If it is determined that the memory has the deficient capacity as a result of the S506, the internet TV determines whether or not to divide and store data in the memory of the other electronic appliance (S508).

If it is intended to divide and store data in the memory of the other electronic appliance as a result of the S508, the internet TV receives information on the selection of the electronic appliance inputted by the user (S510) to store data in the memory of the electronic appliance corresponding to information on the selection of the electronic appliance (S512).

In other words, the internet TV queries to the user whether or not to divide and store data. If the user selects a desired electronic appliance for data division and storage, the internet TV stores data in the memory of the selected electronic appliance.

If data is completely stored as a result of the S510, the internet TV stores a kind of the electronic appliance having the data stored, and information on an Internet Protocol (IP) number and the like, together. After that, the internet TV uses information on the electronic appliance having the data stored, to access to data.

If the memory capacity is not deficient as a result of the S508, the internet TV completes to store data in its own memory (S512).

It will be apparent to those skilled in the art that various modifications and variations can be made in the present invention. Thus, it is intended that the present invention covers the modifications and variations of this invention provided they come within the scope of the appended claims and their equivalents.

## Claims

1. A method of sharing a memory of an electronic appliance using a network system, the method comprising the steps of:
if a memory of a first electronic appliance receives data access information, storing data in the memory of the first electronic appliance; and
if the first electronic appliance has a deficient memory capacity, accessing to a memory of the other electronic appliance connected through a network to store data in the memory of the other electronic appliance.

2. A method of sharing a memory of an electronic appliance using a network system, the method comprising the steps of:
if a memory of a first electronic appliance receives data access information, storing data in the memory of the first electronic appliance;
if the first electronic appliance has a deficient memory capacity, searching and selecting a memory of the other electronic appliance connected through a network;
storing data in the selected memory of the other electronic appliance; and
storing information on the other electronic appliance having the data stored.

3. A method of sharing a memory of an electronic appliance using a network system, the method comprising the steps of:
receiving a memory access signal for data storage in any one of electronic appliances connected to the network system;
searching memories of the electronic appliances connected to the network system; and
storing data in at least one of the memories of the electronic appliances connected to the network system.

4. The method according to one of the claim 1 through claim 3, wherein the first electronic appliance and the other electronic appliance use a P2P (Peer-to-Peer) way for a data communication.

5. The method according to one of the claim 1 through claim 3, wherein the first electronic appliance and the other electronic appliance perform the data communication through a server.

6. The method according to claim 2, wherein the information on the other electronic appliance having the data stored has at least one of a kind of the electronic appliance, an Internet Protocol (IP) number, and a storage data capacity.

7. The method according to one of the claim 1 through claim 3, wherein the selecting of the memory of the electronic appliance connected to the network system is based on a predetermined priority order.

8. The method according to one of the claim 1 through claim 3, wherein the selecting of the memory of the electronic appliance connected to the network system is determined by a user.

9. The method according to one of the claim 1 through claim 3, wherein the memory of the electronic appliance connected to the network system is selected from memories of electronic appliances having memory capacities corresponding to the deficient memory capacity.

10. The method according to claim 3, further comprising storing information on the electronic appliance having the data stored.

11. The method according to claim 10, wherein information on the electronic appliance having the data stored has at least one of a kind of the electronic appliance, an Internet Protocol (IP) number, and a storage data capacity.

12. A network system comprising at least two electronic appliances each having a memory, the electronic appliances being connected each other for a data communication, wherein each of the electronic appliances stores data in its own memory or the other appliance's memory after a data access.

13. The network system according to claim 12, wherein the electronic appliance selects the memory to store the data, depending on available memory capacity, predetermined priority order, or user's selection.

14. The network system according to claim 12, wherein the electronic appliance stores information about the other electronic appliance when storing the data in the other appliance's memory.
